# EUROPÄISCHE PATENTSCHRIFT

(11) **EP 0 865 950 B1**
(45) Veröffentlichungstag und Bekanntmachung des Hinweises auf die Patenterteilung: **04.06.2003**
(21) Anmeldenummer: 98105103.0
(22) Anmeldetag: 20.03.1998
(51) Int. Cl.: B60J 7/057

(54) **Steuereinrichtung mit Fernbedienung für ein Verdeck eines Fahrzeuges**
Operating device with remote control for soft top of convertible vehicle
Système d'actionnement avec télécommande pour toit de voiture convertible

(30) Priorität: 22.03.1997 DE 19712121
(43) Veröffentlichungstag der Anmeldung: 23.09.1998
(73) Patentinhaber: Dr.Ing.h.c. F. Porsche Aktiengesellschaft, 70435 Stuttgart (DE)
(72) Erfinder: Marchart, Horst, 70374 Stuttgart (DE); Kahnau, Bernd, 74343 Sachsenheim (DE); Weiner, Hans, 75417 Mühlacker (DE)

(56) Entgegenhaltungen:
- EP-A- 0 457 964
- DE-A- 3 826 788

## Beschreibung

Die Erfindung betrifft eine Steuereinrichtung mit Fernbedienung für ein Verdeck eines Fahrzeuges.

Aus der EP 0 368 257 B1 ist beispielsweise eine Steuereinrichtung für Fenster und Schiebedach eines Fahrzeuges bekannt geworden. Wird bei dieser Steuereinrichtung über die Betätigung eines Türschlosses mittels eines Schlüssel das Türschloß für eine vorbestimmte Zeit in seiner Schließposition gehalten, so werden Fenster und Schiebedach des Fahrzeuges geschlossen. Die Schließbewegung von Fenster und Schiebedach wird jeweils so lange fortgeführt, bis entweder Fenster oder Schiebedach jeweils geschlossen sind. Fenster und Schiebedach werden aber nur so lange bewegt, wie sich der Schlüssel seiner Schließposition befindet. Diese Funktion dient dazu, dem Fahrer mit dem Abschließen der Tür auch ein sicheres, vollständiges Abschließen des Fahrzeuges im Sinne eines Schließens aller Öffnungen zu ermöglichen.

Die aus EP 0 368 257 B1 bereits bekannte, gattungsgemäße Steuereinrichtung wirkt auf Antriebseinrichtungen für Fenster und Schiebedach eines Fahrzeuges zum Öffnen und Schließen. Es ist eine Schatteinrichtung vorgesehen, die die Antriebseinrichtungen zum Öffnen und Schließen der Fenster und des Schiebedaches ansteuert. Die Schalteinrichtung erhält das Signal eines Schlüsselschalters und steuert die Antriebseinrichtungen im Sinne eines vollständigen selbstständigen Schließens der Fenster und des Schiebedaches an, solange das Signal des Schlüsselschatters anliegt. Liegt das Signal des Schlüsselschalters nicht länger an, so wird der Schließvorgang abgebrochen. Das DE-Gbm 93 06 264 U1 zeigt einen Schlüssel zum Öffnen eines Kraftfahrzeuges, in dem in einen Schlüsselgriff eine Fernsteuerung integriert ist. Im Schlüsselgriff ist ein Funksender angeordnet, der den Bart des Schlüssels als Übertragungsantenne verwendet Eine Schaltvorrichtung am Fahrzeug empfängt das Signal und kann z.B. zum Öffnen eines Türschlosses oder zum Betätigen eines Zündschalters verwendet sein.

Das DE-Gbm 92 07 962 U1 offenbart bereits eine Sicherungseinrichtung für ein Fahrzeug mit ganz oder teilweise zu öffnendem Dach. In einem Fahrzeug mit Schiebedach oder einem Cabriolet ist ein Nässesensor angeordnet, der bei offenem Dach bzw. offenem Verdeck in Bereitschaft gesetzt wird. Der Nässesensor ist mit dem bereits vorhandenen Schalter für die Betätigung des Daches bzw. Verdeckes gekoppelt und betätigt auf diese Weise eine Verschlußeinrichtung für das Dach bzw. Verdeck, wenn Nässe erkannt ist.

Es ist demgegenüber Aufgabe der Erfindung, eine Steuereinrichtung für ein Verdeck eines Fahrzeuges zu schaffen, mit der der Komfort bei der Bedienung des Verdeckes verbessert ist.

Diese Aufgabe wird mit den Merkmalen des Patentanspruches 1 gelöst. Erfindungsgemäß wird vorgeschlagen, daß eine Steuereinrichtung ein Signal einer vom Benutzer zu betätigenden Fernbedieneinrichtung bestehend aus einem Empfänger und einer Sendeeinrichtung auswertet. Liegt dieses Signal über eine vorgegebene Zeit an, so betätigt die Steuereinrichtung eine Antriebseinrichtung zum Bewegen eines Verdeckes im Sinne eines Öffnens des Verdeckes. In vorteilhafter Weise ist es mit der Erfindung möglich, das Verdeck eines Fahrzeuges zu öffnen, ohne daß sich der Benutzer in das Fahrzeug begeben muß. Besonders bei hohen Umgebungstemperaturen und bei Sonnenschein heizen sich aufgrund der Dachkonstruktion Fahrzeuge mit Verdeck in besonderem Maße auf; mit der Erfindung ist es nunmehr möglich, vor dem Einstieg in das Fahrzeug die hier angesammelte erhitzte Luft entweichen zu lassen und somit für den Fahrer des Fahrzeuges angenehme Arbeitsbedingungen zu schaffen. Eine weitere Anwendung ist das Öffnen des Verdeckes, um sperrige Güter im Fahrzeuginnenraum unterbringen zu können. Mit der Erfindung ist es möglich, das Verdeck zu diesem Zwecke zu öffnen, ohne zuvor in das Fahrzeug hineinsteigen zu müssen. Dadurch, daß diese Öffnungsfunktion des Verdeckes nur dann erfolgt, wenn das Signal für eine vorgegebene Zeit anliegt, d.h. die Sendeeinrichtung für eine vorgegebene Zeit betätigt ist, ist eine versehentliche Betätigung des Verdeckes sicher ausgeschlossen. In vorteilhafter Weise wird weiterhin vorgeschlagen, auf eine erste Betätigung der Sendeeinrichtung und damit auf ein erstes Signal des Empfängers hin des Öffnen des Verdeckes einzuleiten und nachfolgend selbsttätig durchzuführen. Dieser Vorgang kann jederzeit durch eine zweiten Betätigung der Sendeeinrichtung und damit ein zweites Signal des Empfängers abgebrochen werden. Für einen derartigen Abbruch ist es nicht mehr erforderlich, daß das Signal über einen vorgegebenen Zeitraum hin anliegt, sondern der Öffnungsvorgang wird ohne Verzögerung abgebrochen. Durch diese Weiterbildung ist zum einen der Bedienkomfort weiter verbessert, da die Sendeeinrichtung nicht während der vergleichsweisen langen Öffnungszeit des Verdeckes betätigt werden muß. Andererseits kann der Öffnungsvorgang jederzeit durch eine kurze Betätigung der Sendeeinrichtung wieder unterbrochen werden, so daß auch ein Einklemmschutz gewährleistet ist. Außerdem wird durch diese Art der Ansteuerung des Verdecköffnens eine Energiequelle der Sendeeinrichtung nur wenig belastet.

Weiterhin könnte das Öffnen des Verdeckes sofort unterbrochen werden, wenn die Sendeeinrichtung nicht mehr betätigt ist. Mit dieser Maßnahme, die jedoch nicht Bestandteil der Erfindung ist, ist in hohem Maße sichergestellt, daß das Öffnen des Verdeckes nicht versehentlich oder unbeaufsichtigt erfolgen kann, so daß die Gefahr eines Einklemmens von Personen oder Gegenständen beim Öffnen des Verdeckes deutlich vermindert ist.

Allgemein wird zur Ausbildung der Fernbedieneinrichtung vorgeschlagen, daß das Signal der Sendeeinrichtung zur Ansteuerung des Verdeckes hinsichtlich seiner Reichweite unterscheidbar ist, d.h. die Entfernung zwischen Sendeeinrichtung und Empfänger wird bei der Signalauswertung berücksichtigt. Die Auswertung erfolgt in der Weise, daß nur dann eine Ansteuerung des Verdeckes ausgelöst wird, wenn die Entfernung zwischen der Sendeeinrichtung und dem Empfänger unterhalb eines vorgegebenen Wertes liegt. Dieser Wert ist vorzugsweise so gewählt, daß sich der Benutzer in der Nähe des Fahrzeuges befindet und wahrscheinlich Sichtkontakt zum Fahrzeug hat.

Weiterhin wird vorgeschlagen, daß die Fernbedieneinrichtung drahtlos arbeitet, z.B. basierend auf elektromagnetischen Wellen (z.B. Funkverbindung), auf optischen Signalen (z.B. Infrarot-Signale) oder auf akustischen Signalen (z.B. Ultraschall-Signale). Ein besonderer Vorteil ergibt sich, wenn die Fernbedieneinrichtung zumindest für die Betätigung des Verdeckes auf optischen oder akustischen Signalen basiert. Da derartige Signale vor allem auf direktem Wege und nur eine geringe Reichweite aufweisen, ist in diesem Fall bereits durch das Übertragungsprinzip sichergestellt, daß eine Betätigung des Verdeckes nur dann möglich ist, wenn der Benutzer in Blickkontakt mit dem Fahrzeug steht. Hiermit wird die Möglichkeit, daß das Öffnen des Verdeckes versehentlich oder unbeaufsichtigt erfolgen kann, weiter vermindert. Derselbe Vorteil läßt sich auch dann mit einer Funkverbindung erzielen, wenn diese so ausgelegt ist, daß sie nur eine geringe Reichweite aufweist und sichtbehindernde Gegenstände nicht durchdringen kann, oder wenn der Empfänger in der Lage ist, bei einem Signal zur Betätigung des Verdeckes die Entfernung zwischen Sendeeinrichtung und Empfänger zu ermitteln und das Signal nur dann weiterzugeben, wenn eine vorgegebene Entfernung nicht überschritten ist.

Eine derartige Fernbedieneinrichtung kann vorteilhafterweise auch zwei Sendeeinrichtungen aufweisen: eine erste Sendeeinrichtung hoher Reichweite zum Entriegeln des Fahrzeuges und zum Auslösen weiterer Funktionen und eine zweite Sendeeinrichtung geringer Reichweite zur Betätigung des Verdeckes. Die Übertragungsprinzipien der beiden Sendeeinrichtungen dürfen sich unterscheiden: so kann z.B. die erste Sendeeinrichtung ein Funksignal abgeben, während die zweite Sendeeinrichtung ein Infrarot-Signal abgibt. Ohne Einschränkung der Sicherheit beim Öffnen und Schließen des Verdeckes kann auf diesem Wege die große Reichweite der Fernbedienung zur Auslösung der sonstigen Funktionen erhalten bleiben. Alternativ kann eine einzige Sendeeinrichtung zwei gleichartige Signale unterschiedlicher Reichweite aussenden, oder der Empfänger ist wie oben beschrieben in der Lage, bei einem Signal zur Betätigung des Verdeckes die Entfernung zwischen Sendeeinrichtung und Empfänger zu ermitteln.

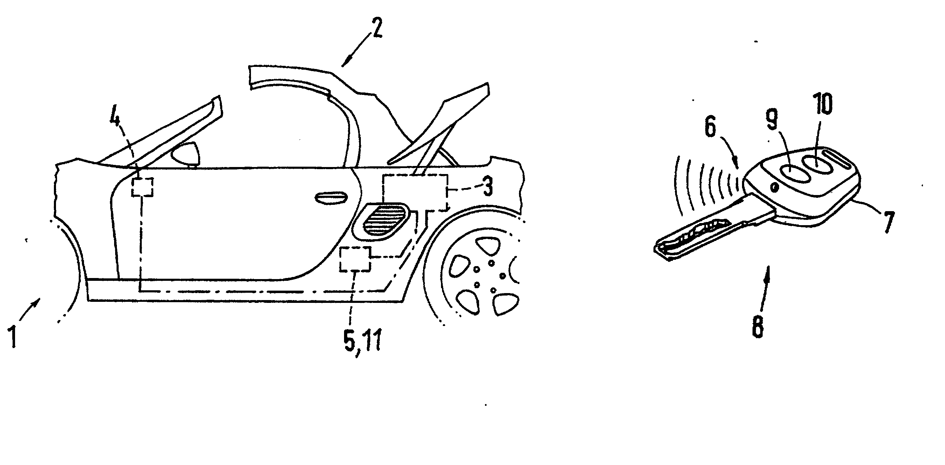

Die Erfindung ist nachstehend anhand des in der einzigen Figur dargestellten Ausführungsbeispieles näher erläutert.

Ein Fahrzeug 1 ist mit einem Verdeck 2 versehen, das durch eine Antriebseinrichtung 3 fremdkraftbetätigt von einem geöffneten Zustand (Fahrzeug 1 offen) in einen geschlossenen Zustand (Fahrzeug 1 mit Verdeck 2 verschlossen) und umgekehrt gebracht werden kann. Im dargestellten Zustand befindet sich das Verdeck 2 in einer Zwischenstellung zwischen geöffnetem und geschlossenen Zustand.

Mittels einer innerhalb des Fahrzeuges 1 angeordneten Schalteinrichtung 4 kann die Antriebseinrichtung 3 willkürlich von einem Benutzer des Fahrzeuges 1 sowohl im Sinne eines Öffnens wie auch im Sinne eines Schließens des Verdeckes 2 angesteuert werden.

Ferner ist an geeigneter Stelle im Fahrzeug 1 ein Empfänger 5 vorgesehen, der ein drahtlos übertragenes Signal einer Sendeeinrichtung 6 empfängt. Die Sendeeinrichtung 6 ist in einem Schlüsselkopf 7 eines dem Fahrzeug 1 zugeordneten Schlüssels 8 untergebracht. Dieser Schlüssel 8 ist insgesamt mit zwei Drucktasten zum Betätigen der Sendeeinrichtung 6 versehen: Einer ersten Drucktaste 9 zum Betätigen einer nicht näher gezeigten Schließanlage des Fahrzeuges 1 und einer zweiten Drucktaste 10 zum Betätigen des Verdeckes2, die jeweils die Abgabe eines charakteristisches Signales an die Sendeeinrichtung 6 auslösen. Der Empfänger 5 und die Sendeeinrichtung 6 bilden zusammen eine drahtlose Fernbedienung für das Verdeck 2, wobei die Sendeeinrichtung 6 den mobilen Teil der Fernbedienung bildet.

Der Empfänger 5 wertet das Signal der Sendeeinrichtung 6 aus und erkennt hierbei, welche der beiden Drucktasten 9, 10 betätigt ist. Erkennt der Empfänger 5 eine Betätigung der zweiten Drucktaste 10, so gibt er ein Signal an ein Steuergerät 11 weiter. Dieses Steuergerät 11 prüft nun, ob das Signal des Empfängers 5 über einen vorgebenen Zeitraum Tlhinweg anliegt; im vorliegenden Beispiel beträgt dieser Zeitraum T1 zwei Sekunden. Zur Erfüllung dieser Bedingung muß die zweite Drucktaste 10 zumindest für den Zeitraum T1 gedrückt gehalten werden. Ist dies der Fall, so betätigt die Steuereinrichtung 11 die Antriebseinrichtung 3 im Sinne eines Öffnens des Verdeckes 2. Diese Ansteuerung der Antriebseinrichtung 3 wird bis zum vollständigen Öffnen des Verdeckes 2 aufrecht erhalten, wenn das Signal des Empfängers 5 einmal über den vorgegebenen Zeitraum T1 hinweg vorgelegen hat. Zum Öffnen des Verdeckes 2 ist demzufolge die zweite Drucktaste 10 vorzugsweise so lange zu drücken, bis zu erkennen ist, daß der Öffnungsvorgang des Verdeckes 2 eingeleitet ist. Danach kann die Drucktaste 10 losgelassen werden.

Zum Abbrechen des Öffnungsvorganges, beispielsweise um ein Einklemmen eines Gegenstandes oder einer Person zu verhindern, wird die zweite Drucktaste 10 ein weiteres Mal betätigt. Der Empfänger 5 erhält dieses Signal und leitet es an das Steuergeräte 11 weiter, das nun sofort die Antriebseinrichtung 3 im Sinne eines Abbruches der Bewegung des Verdeckes 2 ansteuert, ohne daß der genannte vorgegebene Zeitraum T1 abgewartet wird.

Der Öffnungsvorgang des Verdeckes 2 beinhaltet vor dem Öffnen des Verdeckes 2 ein Öffnen von nicht dargestelleten Seitenscheiben des Fahrzeuges. Wird der Öffnungsvorgang durch die Fernbedienung über das vollständige Öffnen des Verdeckes 2 hinaus fortgesetzt, so werden die Seitenscheiben - soweit dies bei geöffnetem Verdeck 2 möglich ist - wieder geschlossen bzw. in ihre obere Position angehoben. Selbstverständlich enthält der Öffnungsvorgang auch alle notwendigen Bewegungen von gegebenenfalls vorhandenen Deckeln und Klappen, die zur Abdeckung des Verdeckes 2 vorgesehen sind.

Aus Sicherheitsgründen ist es vorgesehen, daß eine Wiederaufnahme des Öffnungsvorganges des Verdeckes 2 nur dann möglich ist, wenn der zweiten Drucktaste 10 ein weiteres Mal über den vorgegebenen Zeitraum hinweg betätigt wird.

Das Schließen des Verdeckes 2 kann in analoger Weise ebenfalls durch die Fernbedienung ausgelöst werden. Darüber hinaus kann es vorgesehen sein, das eine Verdeckbedienung nur dann möglich ist, wenn das Fahrzeug zuvor mit Hilfe des ersten Drucktasters 9 oder auf andere Weise entriegelt wurde.

## Patentansprüche

1. Steuereinrichtung für eine Antriebseinrichtung (3) zum Öffnen und Schließen eines Fahrzeugteiles (2), mit
- einer Schalteinrichtung (4), die die Antriebseinrichtung (3) zum Öffnen und Schließen des Fahrzeugteiles (2) ansteuert,
- einer Fernbedieneinrichtung bestehend aus einer Sendeeinrichtung und einem Empfänger (5) für ein Signal der Sendeeinrichtung (6), wobei die Sendeeinrichtung (6) ein Signal abhängig von seiner Betätigung abgibt,
- wobei die Steuereinrichtung das Signal des Empfängers (5) erhält und die Antriebseinrichtung (3) im Sinne einer Bewegung des Fahrzeugteiles (2) ansteuert, wenn die Sendeeinrichtung (6) länger als für einen vorgegebenen Zeitraum betätigt ist,
**dadurch gekennzeichnet, dass** das Fahrzeugteil ein Verdeck (2) ist, die Schalteinrichtung (4) die Antriebseinrichtung (3) im Sinne eines vollständigen selbstständigen Öffnens oder Schließens des Verdeckes (2) ansteuert, wenn die Sendeeinrichtung (6) zumindest für einen vorgegebenen Zeitraum betätigt ist, und die Schalteinrichtung (4) den Bewegungsvorgang auf eine zweite Betätigung des Sendeeinrichtung (6) hin abbricht.

2. Steuereinrichtung nach Anspruch 1, **dadurch gekennzeichnet, daß** die Sendeeinrichtung (6) in einem Schlüsselkopf (7) eines dem Fahrzeug (1) zugeordneten Schlüssels (8) angebracht ist.

3. Antriebseinrichtung nach Anspruch 1 oder 2 **dadurch gekennzeichnet, daß** das Signal der Sendeeinrichtung (6) zur Ansteuerung des Verdeckes (2) hinsichtlich seiner Reichweite unterscheidbar ist, wobei auf das Signal hin der Empfänger (5) oder die Steuereinrichtung nur dann eine Ansteuerung des Verdeckes (2) auslöst, wenn die Entfernung zwischen der Sendeeinrichtung und dem Empfänger unterhalb eines vorgegebenen Wertes liegt.

4. Steuereinrichtung nach Anspruch 3 **dadurch gekennzeichnet, daß** die Sendeeinrichtung (6) zumindest zwei Betätigungselemente (9,10) aufweist, wobei sich die von den Betätigungseinrichtungen ausgelösten Signale der Sendeeinrichtung in ihrer Reichweite unterscheiden sind und das von der zweiten Betätigungseinrichtungen (10) ausgelöste Signal eine geringere Reichweite als das von der ersten Betätigungseinrichtungen (9) ausgelöste Signal aufweist.

5. Steuereinrichtung nach Anspruchs 4 **dadurch gekennzeichnet, daß** das von der zweiten Betätigungseinrichtungen (10) ausgelöste Signal ein Infrarot-Signal und das von der ersten Betätigungseinrichtungen (9) ausgelöste Signal ein Funksignal ist.

## Claims

1. A control system for a drive unit (3) for opening and closing a vehicle part (2), comprising
- a switching device (4) which activates the drive unit (3) for opening and closing a vehicle part (2),
- a remote-control system comprising a transmitter and a receiver (5) for a signal of the transmitter (6), the transmitter (6) emitting a signal dependent upon its actuation,
- wherein the control system receives the signal of the receiver (5) and activates the drive unit (3) for the purpose of moving the vehicle part (2) if the transmitter (6) is actuated for longer than a predetermined period,
**characterised in that** the vehicle part is a soft top (2), the switching device (4) activates the drive unit (3) for the purpose of fully and independently opening or closing the soft top (2) when the transmitter (6) is actuated at least for a predetermined period, and the switching device (4) interrupts the movement process on a second actuation of the transmitter (6).

2. A control system according to claim 1, **characterised in that** the transmitter (6) is housed in a key head (7) of a key (8) associated with the vehicle (1).

3. A control system according to claim 1 or 2, **characterised in that** the signal of the transmitter (6) for activation of the soft top (2) is differentiable by its range, the receiver (5) or the control system only triggering activation of the soft top (2) in response to the signal when the distance between the transmitter and the receiver lies below a predetermined value.

4. A control system according to claim 3, **characterised in that** the transmitter (6) has at least two actuating devices (9, 10), the transmitter signals emitted by the actuating devices being differentiated by their range, and the signal emitted by the second actuating device (10) having a shorter range than the signal emitted by the first actuating device (9).

5. A control system according to claim 4, **characterised in that** the signal emitted by the second actuating device (10) is an infrared signal and the signal emitted by the first actuating device (9) is a radio signal.

## Revendications

1. Dispositif de commande d'un dispositif d'entraînement (3) pour l'ouverture et la fermeture d'une partie (2) d'un véhicule comportant
- un dispositif de commutation (4) qui commande le dispositif d'entraînement (3) pour l'ouverture et la fermeture de la partie (2) du véhicule,
- un dispositif de télécommande constitué d'un dispositif d'émission et d'un récepteur (5) pour un signal du dispositif d'émission (6), le dispositif d'émission (6) délivrant un signal en fonction de son actionnement,
- le dispositif de commande recevant le signal du récepteur (5) et commandant le dispositif d'entraînement (3) dans le sens d'un mouvement de la partie (2) du véhicule lorsque le dispositif d'émission (6) est actionné plus longtemps que pendant un laps de temps prédéterminé,
**caractérisé en ce que** la partie du véhicule est une capote (2), le dispositif de commutation (4) commande le dispositif d'entraînement (3) dans le sens d'une ouverture ou fermeture complète et indépendante de la capote (2) lorsque le dispositif d'émission (6) est actionné au moins pendant un laps de temps prédéterminé, et le dispositif de commutation (4) interrompt le mouvement à la suite d'un deuxième actionnement du dispositif d'émission (6).

2. Dispositif de commande selon la revendication 1, **caractérisé en ce que** le dispositif d'émission (6) est placé dans la tête (7) d'une clé (8) affectée au véhicule (1).

3. Dispositif de commande selon la revendication 1 ou 2, **caractérisé en ce que** le signal du dispositif d'émission (6) pour la commande de la capote (2) peut être différencié en ce qui concerne sa portée, à la suite du signal récepteur (5), ou le dispositif de commande ne déclenche une commande de la capote (2) que si la distance entre le dispositif d'émission et le récepteur est inférieure à une valeur prédéfinie.

4. Dispositif de commande selon la revendication 3, **caractérisé en ce que** le dispositif d'émission (6) comporte au moins deux éléments d'actionnement (9, 10), les signaux du dispositif d'émission, déclenchés par les dispositifs d'actionnement, étant différents dans leur portée et le signal déclenché par le deuxième dispositif d'actionnement (10) présentant une portée moindre que le signal déclenché par le premier dispositif d'actionnement (9).

5. Dispositif de commande selon la revendication 4, **caractérisé en ce que** le signal déclenché par le deuxième dispositif d'actionnement (10) est un signal infrarouge et le signal déclenché par le premier dispositif d'actionnement (9) est un signal radio.
